# EUROPEAN PATENT APPLICATION

(11) **EP 2 953 114 A1**
(43) Date of publication of application: **09.12.2015**
(21) Application number: 15170343.6
(22) Date of filing: 02.06.2015
(51) Int. Cl.: G09B 5/00

(54) **SYSTEM AND METHOD FOR TRAINING**

(30) Priority: 02.06.2014 US 201462006540 P; 12.11.2014 US 201462078717 P; 01.06.2015 US 201514726911
(71) Applicant: Accenture Global Services Limited, Dublin 4 (IE); Straker, Heledd, London EC3M 3BD (GB)
(72) Inventor: STRAKER, Heledd, London, EC3M 3BD (GB); WALSH, Matthew R., London, EC3M 3BD (GB); BAREA, Diana, London, EC4M 7AN (GB); DIGBY, Martin, London, EC4M 7AN (GB); NORMAN, Clare, Beaulieu Hants, S042 7YG (GB); GILBERT, Marissa B., Philadelphia, PA Pennsylvania 19103 (US)
(74) Representative: Conroy, John

(57) **Abstract**

Methods, systems, and apparatus, including computer programs encoded on a computer storage medium, for training users. The methods, systems, and apparatus include actions of obtaining multiple training modules that each correspond to a different time interval associated with a training program, each training module specifying one or more respective training tasks. Additional actions include identifying a particular training module and providing a notification that the particular training module is available for access. Further actions include receiving a request to access one or more tasks associated with the particular training module and providing one or more particular training tasks. More actions include receiving, at a later time, an indication of completion of the one or more particular training tasks and determining that the corresponding time interval is also associated with the later time. Additional actions include generating a score for the particular training module.

## Description

### CROSS-REFERENCE TO RELATED APPLICATIONS

This application claims the benefit of U.S. Provisional Patent Application No. 62/006,540, filed June 2, 2014; U.S. Provisional Patent Application No. 62/078,717, filed November 12, 2014; and 14/726,911, filed June 1, 2015 which are hereby incorporated by reference.

### TECHNICAL FIELD

This disclosure generally relates to a training system.

### BACKGROUND

Many different types of training systems have been developed to teach trainees new skills. However, most training systems are based on the premise that the most efficient way to train people to perform a task is to have the people participate in a single training event that might include reading text relating to the task, observing or listening to a presentation of someone performing the task, and having the trainee answer questions regarding what they have read or viewed to test their comprehension.

These techniques often fail to provide adequate training reinforcement, and neuroscience research has demonstrated that these approaches do not create experiential memories and therefore do not adequately engage the trainee to effectively embed skills and to develop a trainee's fluency with the task. Thus, many people trained using such techniques are unable to adequately utilize the skills from training in real world environments.

### SUMMARY

In general, an aspect of the subject matter described in this specification may involve a process for training users with a training program that includes training modules that each correspond to a different time interval. A system may use principles of gamification to train user. For example, a system may enable multiple teams of users to participate in the training program and compete against one another in a form of a game. The training program may include a sequence of training modules that each correspond to a different time interval. The training modules may be associated with one or more training tasks.

The system may provide one or more training programs to users. During implementation of a particular training program, the system may identify training modules that correspond to time intervals at different times and provide notifications that the identified training modules are accessible. In response to requests to access one or more training tasks associated with the training modules, the system may provide the one or more training tasks and receive indications of completion of the training tasks.

The system may determine whether the indications of completion were received during the appropriate time intervals for the training tasks and generate scores for the particular training modules based on the indications. The system may provide scores for each of the training modules and a cumulative score so that teams may compete with other teams by viewing scores for their own team relative to the scores of the other teams. Depending on the scores for the teams, the system may also generate bonus rounds so that teams that are behind in their scores may score additional points to be more competitive with the other teams. In some implementations, the leading teams may also participate in the bonus rounds. Additionally or alternatively, depending on the scores for the teams, the system may also perform other functions. For example, easter eggs or other content may be provided to a team when a particular score threshold is satisfied. In some implementations, the system may provide additional content based on factors other than score. For example, the system may provide easter eggs in response to users selecting a secret hidden button or a progress of a user.

The system may provide teams with high scores awards or prizes. Additionally or alternatively, the system may provide one or more teams without high scores awards or prizes. For example, the system may provide an award or prize to a team with a moderate score.

In some aspects, the subject matter described in this specification may be embodied in methods that may include the actions of obtaining multiple training modules that each correspond to a different time interval associated with a training program. Each training module may specify one or more respective training tasks. Additional actions may include identifying, from among the multiple training modules, a particular training module whose corresponding time interval is associated with an initial time and providing, during the time interval and to a user device, a notification that the particular training module is available for access. Further includes may include receiving a request to access one or more tasks associated with the particular training module from the user device and in response to receiving the request to access the one or more tasks associated with the particular training module from the user device, providing one or more particular training tasks associated with the particular training module to the user device. Additional actions may include receiving, at a later time, an indication of completion of the one or more particular training tasks from the user device and determining that the corresponding time interval is also associated with the later time at which the indication of completion is received. Further includes may include generating a score for the particular training module based on the indication of completion.

Other versions of the subject matter include corresponding systems, apparatus, and computer programs, configured to perform the actions of the methods, encoded on computer storage devices or non-storage devices.

These and other versions may each optionally include one or more of the following features. For instance, in some implementations actions may include identifying, at a further later time and from among the multiple training modules, a different training module whose corresponding different time interval is associated with the further later time and providing, during the different time interval and to a user device, a notification that the different training module is available for access. Additional actions may include receiving a request to access one or more tasks associated with the different training module from the user device and in response to receiving a request to access the one or more tasks associated with the different training module from the user device, providing one or more particular training tasks associated with the different training module to the user device. Further actions may include receiving, at an even further later time, a subsequent indication of completion of one or more the particular training tasks and determining that the corresponding different time interval is also associated with the even further later time at which the subsequent indication of completion is received. Additional actions may include generating a score for the different training module based on the subsequent indication of completion.

In certain aspects, actions may include generating a cumulative score based on the score for the particular training module and the score for the different training module.

In some implementations, actions may include ranking the cumulative score against other cumulative scores based on other scores for the particular training module and other scores for the different training module.

In some aspects, actions may include based on a ranking of the cumulative score, determining to provide an additional training module to the user device.

In certain aspects, based on the score, determining to modify the particular training module for future use.

In some implementations, actions may include providing, during the time interval and to a second user device, a notification that the particular training module is available for access and receiving a second request to access one or more tasks associated with the particular training module from the second user device. Additional actions may include, in response to receiving the second request to access the one or more tasks associated with the particular training module from the second user device, providing the one or more particular training tasks associated with the particular training module to the second user device. Further actions may include receiving, at a second later time, a second indication of completion of the one or more particular training tasks from the second user device. Additional actions may include determining that the corresponding time interval is also associated with the second later time at which the second indication of completion is received from the second user device and generating a second score for the particular training module based on the second indication of completion.

In some aspects, actions may include the user device includes a mobile computing device.

In certain aspects, providing one or more particular training tasks associated with the particular training module to the user device may include providing instructions to the user device that enable the user device to validate completeness of the one or more particular training tasks.

In some implementations, generating a score for the particular training module based on the indication of completion may include in response to receiving the indication of completion, obtaining social network information associated with the one or more particular training tasks and generating the score based on the social network information.

The details of one or more implementations of the subject matter described in this specification are set forth in the accompanying drawings and the description below. Other potential features, aspects, and advantages of the subject matter will become apparent from the description, the drawings, and the claims.

### DESCRIPTION OF DRAWINGS

FIG. 1 is a diagram of an example, iterative, process for training users.
FIG. 2 is a block diagram of an example system for training users.
FIG. 3 is a flowchart of an example process for training users.
FIG. 4 illustrates a schematic diagram of an exemplary generic computer system.

Like reference symbols in the various drawings indicate like elements.

### DETAILED DESCRIPTION

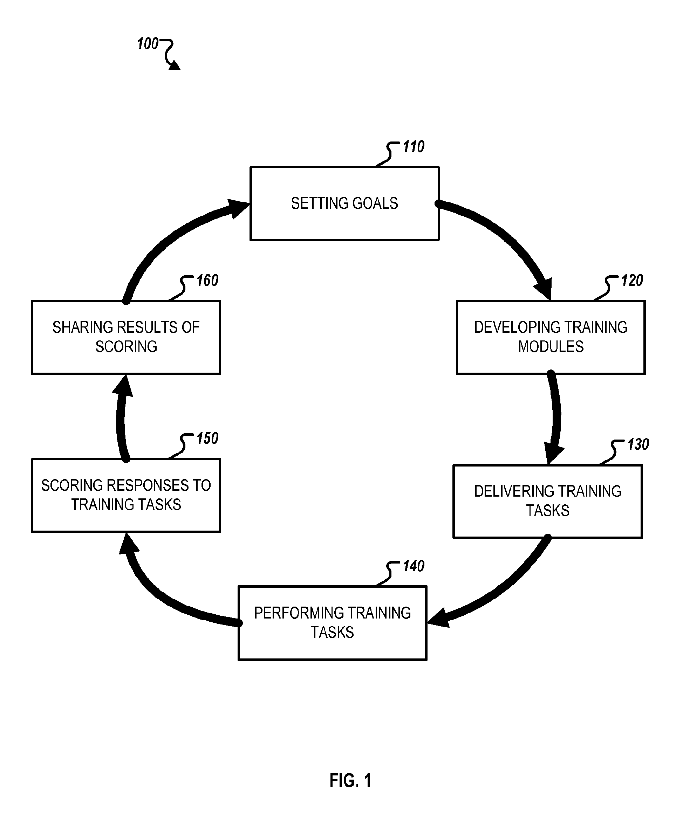

FIG. 1 is a diagram of an example, iterative process 100 for training users. The iterative process 100 may use gamification principles. Each iteration in the process 100 may represent one time interval of a training program. The process 100 may include setting goals for the training program (110). For example, goals of a training program may include training users to be proficient in the use of a particular tool or training users to understand a particular procedure. An administrator may set the goals for the training program. For example, an administrator may determine that a goal is to teach users how to use a training tool. Additionally or alternatively, goals for the training program may be set by another process. For example, an administration process may set goals of the training program according to one or more administration rules. A particular goal may be set based on multiple processes or administrators. A particular process or administrator may set multiple goals.

The process 100 may include developing training modules for the training program (120). The training modules may each correspond to different time intervals of the training program. For example, a training program may have a duration of thirty days, and each training module may correspond to a different day. In another example, the duration may be a predetermined number of minutes, hours, days, weeks, or months. The time intervals may be of uniform duration or different duration. For example, the training program may have a duration of five weeks, where the first time interval may include the first two weeks and the remaining weeks may each correspond to a different time interval.

Each training module may be associated with one or more particular training tasks. For example, a particular training task may include instructing a team to create a particular search query for a tool to perform a particular search. Another particular training task may include instructing a team to review a particular document without a particular tool. Alternate or additional examples of training tasks may include one or more of reviewing particular results or performing particular actions, either with a particular tool or without a particular tool. The administrator may develop the particular training tasks for particular training modules. Additionally or alternatively, particular training tasks for particular training modules may be developed by another program. For example, an administration process may develop particular training tasks according to one or more administration rules.

A team may include one or more users, e.g., one, two, five, twenty. Teams may have different number of users. For example, if there are three teams and eight users, two teams may have three users and one team may have two users.

The process 100 may include delivering training tasks to teams of users (130). For example, the process 100 may include, at the beginning of each time interval, providing notifications to teams that the training tasks for the time interval are accessible and may be requested. The process 100 may include preventing access to training tasks, or training modules, for one or more of earlier or future time intervals. For example, during a second time interval after a first time interval but before a third interval, particular training tasks associated with the second time interval and first time interval may be accessible but particular training tasks associated with a subsequent third time interval may not be accessible.

The process 100 may include performing training tasks (140). The one or more particular training tasks that are delivered may be performed by the teams of users. For example, a particular training task of creating a particular search query for a tool may be performed by the team and indication of completion of the particular task may be received.

The process may include scoring responses to training tasks (150). At the end of each time interval, each team may be assigned a score for each training module based on the indications of completion received from the teams for the training tasks. Teams that provide better or earlier indications of completion may be assigned higher scores, and teams that do not provide an indication of completion of particular tasks during a corresponding time interval may receive no score.

The process 100 may include sharing results of the scoring with the teams (160). For example, the scores for each of the training modules corresponding to each of the time intervals that have ended may be shared with all the teams. The teams may compare their scores for each training module and compare their current cumulative scores.

After each iteration, the process 100 may include setting or adjusting goals (110), and developing or adjusting the training modules (120) based on how the teams performed. For example, if all teams performed particularly poorly on a particular task, a supplemental task may be added in a supplemental training module or the particular task may be modified so that it is more easily understood or more easily completed. In another example, bonus training modules may be provided if particular teams are behind in score to provide opportunities for those teams to have more competitive scores. Accordingly, the training program may use gamification principles to provide training to users in a form of a competitive game.

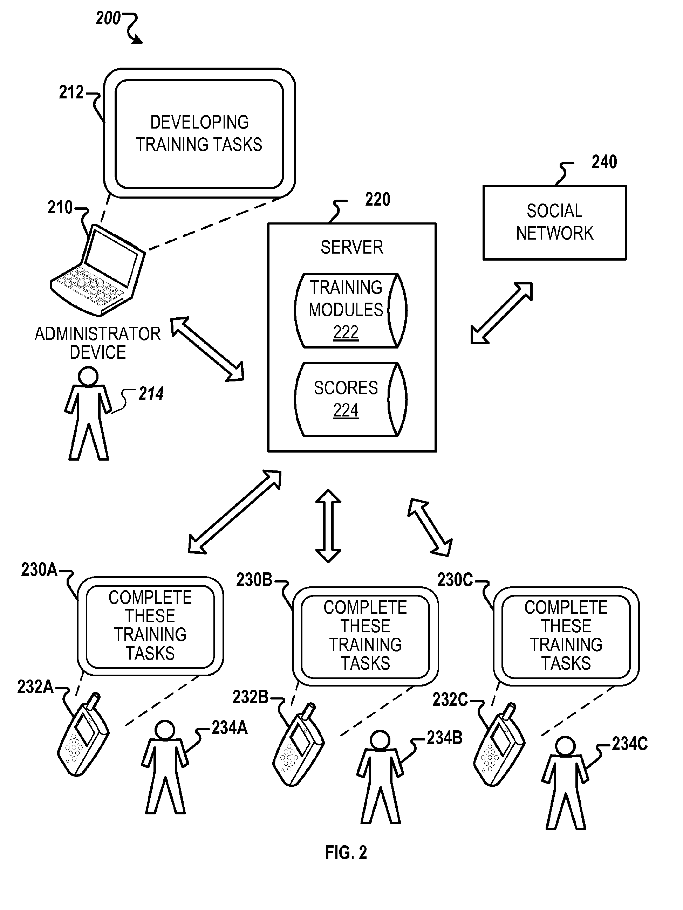

FIG. 2 is a block diagram of an example system 200 for training users 234A-C. The system 200 may include a server 220 that stores training modules 222 for a training program and scores 224, an administrator device 210 for an administrator 214 to manage the training program, user devices 232A-C for users 234A-C to interact with the system 200, and a social network 240 in communication with the server 220.

The administrator device 210 may be a computing device that enables an administrator 214 to develop and manage a training program. For example, the administrator device 210 may include tools that provide a development interface 212 for the administrator 214 to develop training modules for the training program. The administrator device 210 may generate the training modules 222 on the administrator device 210 and then provide the training modules 222 to the server 220, the administrator device 210 may generate the training modules 222 on the server 220, or the administrator device 210 may generate the training modules 222 on both the administrator device 210 and the server 220.

The administrator device 210 may be used to define particular time intervals of the training program, and for each time interval, the training module 222 that corresponds to the time interval. For example, the administrator device 210 may be used to define that the training program includes thirty time intervals that each cover one day of thirty consecutive or non-consecutive days, where each of the thirty time intervals corresponds to a particular different one of thirty training modules 222. The time intervals may be non-contiguous. For example, the time intervals for a training program may extend from 9 AM EST to 5 PM EST during each day of thirty business days.

After the training program has begun, the administrator device 210 may be used by the administrator 214 to manage the training program. For example, the administrator 214 may change team information, e.g., names or members of teams, using the administrator device 210. In another example, the administrator device 210 may be used to modify existing training modules 222. For example, the administrator device 210 may be used to change the wording of tasks that have instructions that are confusing, to re-order training modules that are determined to be better in a different sequence, to change the duration of various time intervals, or to add or remove time intervals.

In some implementations, after a training program has begun, the administrator device 210 may add additional tasks to a training module as bonus tasks. For example, if a particular team is ahead in score of all the other teams by a significant amount, the administrator device 210 may be used to add an additional task to the next training module. These additional tasks may be referred to as bonus tasks. The additional task may be an opportunity for other teams to decrease the score lead of the particular team. In some implementations, only the teams that are behind may receive the additional tasks. In some implementations, the bonus task may be added in the form of a bonus training module that includes the bonus task that corresponds to a bonus time interval, instead of added to an existing training module. A bonus time interval may overlap one or more existing time intervals. Alternatively, a bonus time interval may be inserted before an existing time interval and defer the existing time intervals by the length of the bonus time interval.

In some implementations, the administrator device 210 may be used by the administrator 214 to define bonus task rules or bonus training module rules for the training program. The bonus task rules may define rules for the server 220 to apply to determine whether to provide a bonus task for a particular training module and the bonus training module rules may define rules for the server 220 to apply to determine whether to provide a bonus training module.

The server 220 may store the training modules 222 of the training program and store scores 224 for teams. In addition to scores, the server 220 may also store team information. For example, the server 220 may store team names and indications of the users that are members of each team. The team information may be received by the server 220 from the user devices 232A-C prior to when a training program begins. Alternatively, the team information may be received from the administrator device 210 prior to when the training program begins.

The server 220 may receive instructions from the administrator device 210 to begin a training program at a particular time. For example, the server 220 may receive an instruction to begin a training program on January 1, 2015 at 9:00 AM EST. When a training program begins, the server 220 may determine one or more particular time intervals that corresponds to an initial time and identify one or more training modules 222 that corresponds to the one or more particular time intervals. For example, when the server 220 begins a training program, the server 220 may determine the current time corresponds to an initial time interval and identify an initial training module 222 that corresponds to the initial time interval. In a second example, the server 220 may begin a training program at a particular time, and upon beginning the training program, may determine that the current time in the training program corresponds to two overlapping time intervals that both start when the training program starts but end at different times. In another example, during a fifteenth day during a training program with thirty time intervals of one day each, the server 220 may identify that a fifteenth day is associated with a fifteenth time interval which corresponds to a fifteenth training module.

In response to identifying a particular training module, the server 220 may provide the user devices 232A-232C a notification that the particular training module is available for access from the server 220. For example, the notification may be in the form of a push message to native user device training applications installed on the user devices 232A-C. In another example, the notification may be a short messaging service (SMS) text message, an e-mail, or a phone call to the user devices 232A-232C.

The server 220 may provide the notification as soon as the time interval corresponding to the training module begins. For example, if the time interval for a particular training module begins on the third day of a training program at 9:00 AM EST, at 9:00 AM EST on the third day of the training program the server 220 may determine to provide the notification and provide the notification.

The server 220 may receive a request to access one or more training tasks associated with the particular training module. For example, the server 220 may receive requests from the user devices 232A-232C to access any training tasks associated with a training module corresponding to a current time interval. In some implementations, the requests may indicate the particular time interval that the training tasks are requested for. For example, the requests may indicate that one or more tasks for a third time interval are requested. In another example, the requests may indicate that one or more tasks for a current time interval are requested and the server 220 may determine what the current time interval is. In other implementations, the requests may indicate a particular training module instead of a particular time interval. For example, the request may indicate one or more tasks for a third training module are requested.

In response to receiving the request, the server 220 may provide one or more particular training tasks associated with the particular training module to the user devices 232A-C. For example, for a training module that is associated with a particular task of generating a search query for a particular tool, the server 220 may provide the user devices 232A-C the task of generating a search query for the particular tool. In another example, for a training module that is associated with a particular task of reviewing a document, the server 220 may provide the user devices 232A-C the task of reviewing the document. In some implementations, the server 220 may provide the task in the form of a task that may be viewed in a training program application installed on the user devices 232A-C.

The server 220 may receive at a later point in time an indication of completion of the one or more particular tasks from the user devices 232A-C. For example, the server 220 may receive a communication from a training program application installed on the user devices 232A-C that indicates that one or more particular tasks were completed, receive a SMS text message, or receive an e-mail. The indication may indicate one or more of, for each of one or more tasks, the task that was completed, the training module for which the task was completed, the user that completed the task, the team that completed the task, the time that the task was completed, or an answer in response to the task.

The server 220 may determine that the indication of completion for tasks of a particular training module corresponding to a time interval is received during a time that is associated with the time interval. For example, for a training module corresponding to a time interval of one day, the server 220 may determine that the indication of completion for the training module is received during that time interval and then determine to generate a score for the training module. If the server 220 determines that the indication of completion for the training module is not received during the time interval, e.g., received after the time interval has ended, the server 220 may determine that the indication of completion was received after the one or more tasks expired, is thus invalid, and determine not to generate a score for the training module for the indication of completion, e.g., give a score of zero for that team for that training module.

The determination of whether the indication of completion of one or more tasks is received during a time that is associated with the time interval corresponding to the training module associated with the one or more tasks may provide for gamification of the training program. For example, the users and teams may be incentivized to complete tasks within the time interval and provide indications of completion so that they receive a score for the training module corresponding to the time interval. The users and teams may compare their scores and compete with one another to obtain the highest cumulative score. Determining whether indications of completion are received within a certain time may also provide the server 220 time to score the indications of completion and provide results of the scores to the users 234A-234C. For example, time intervals beginning at 10 AM and ending at 5 PM may provide the server 220 time between 5 PM and 10 AM to score indications of completion and provide the scores to the users 234A-234C. The determination of whether an indication of completion is received during a time associated with the time interval may additionally or alternatively ensure that users and teams "play" the training program on equal ground. For example, the users and teams may all receive, at substantially the same time, a notification that the training module is available for access and may all be given a time interval with the same duration ending at the same time to complete one or more tasks and provide the indication of completion.

The server 220 may generate scores for particular training modules based on the indications of completion. The server 220 may analyze the indications received from each team for a particular training module and assign a respective score for each time. For example, for indications of completion that indicate that a particular task was completed without an answer provided by a team, the server 220 may assign a predetermined "full" score for the team and assign a zero score for teams for no indication of completion is received. In another example, the server 220 may assign higher scores for teams for which the indications of completion were received earlier.

In another example, for indications of completion that include an answer, the server 220 may analyze the answer to assign a score. For example, the training module 222 may apply scoring rules defined by the administrator 214 using the administrator device 210. The training module 222 may apply the scoring rules to the answers to generate a score for each answer. For example, a rule may be that an answer must include six key words and that a team is given five points for each key word included in the answer provided by the team.

In another example, the server 220 may determine a score based on information from the social network 240. For example, the task may be to create a popular post related to the training in the social network 240. Based on scoring rules, the server 220 may then access the social network 240, determine a popularity of the post, and then generate a score based on the determined popularity. In an example, the server 220 may calculate a popularity based on the number of comments in the social network 240 that are associated with the post and assign a score based on how popular the post was relative to posts of other teams. For example, the team with the most popular post may receive ten points, the team with the second most popular post may receive nine points, etc.

The server 220 may calculate scores for each particular task associated with a training module and then combine the scores for the particular tasks into a score for the training module. For example, the server 220 may calculate a score of twenty for a first team for a first task of a training module, and a score of fifteen for the first team for a second task of the training module, and then combine the scores into a score of thirty five for the first team.

In some implementations, the administrator device 210 may also be involved in generating the score. For example, the server 220 may generate a draft score for each team for each training module based on rules defined by the administrator 214 and provide the draft score along with the indications of completion to the administrator device 210 for approval by the administrator 214. The server 220 may then receive an approval of the draft score or a revised score for the team. In some implementations, the server 220 may generate a score based on combining a draft score generated by applying the rules and a discretionary score received by the administrator device 210. For example, the 80% of the score may be from applying the rules and 20% of the score may be from a discretionary score received from the administrator 214 via the administrator device 210.

In some implementations, in scoring the server 220 may validate that the task was completed. For example, for a task to upload a document to the social network 240, the server 220 may access the social network 240 to verify that the user uploaded a document to the webpage and then assign a score based on the validation.

The server 220 may provide the scores to the user devices 232A-232C. For example, after the server 220 generates the scores the server 220 may automatically transmit the scores to the user devices 232A-232C without a request from the user devices 232A-232C for the scores. In another example, the server 220 may provide a notification to the user devices 232A-232C of the updated scores and in response to a request from the user devices 232A-232C for the scores, provide the scores to the user devices 232A-232C.

In some implementations, the server 220 may calculate rankings of teams based on the cumulative scores of each team. For example, the server 220 may rank all the teams based on numerical values of the scores. The server 220 may rank teams with better scores as higher and teams with worse scores as lower. The server 220 may rank teams in the form of a leaderboard where all teams are displayed along with their scores in descending score order. In some implementations, when a ranking of a team changes, the server 220 may transmit a notification to the user devices of the team indicating that the team's rank has changed. For example, if a team that is ranked in 2^{nd} place on the leaderboard drops down to 3^{rd} place, the server 220 may transmit a notification to user devices of the now 3^{rd} place team that the team dropped from 2^{nd} place to 3^{rd} place. Additionally or alternatively, the server 220 may transmit a notification to the user devices of the now 2^{nd} place team that the team moved up from 3^{rd} place. In some implementations, the ranking may be based on individual scores for each training module for each team. For example, a team with a cumulative score lower than another team may still be ranked higher than the other team if the team has a higher ranking for more training modules, e.g., a team ranked first, first, and second for three corresponding training modules may be ranked higher than a team ranked second, second, and first with a higher cumulative score.

In some implementations, the server 220 may alternatively or additionally provide bonus tasks. A training program or training module may include rules that a server 220 may apply to determine whether to provide a bonus task. For example, the server 220 may obtain a rule for a training program that specifies criteria that if a team has been ahead of other teams by a predetermined score, e.g., ten points, for a predetermined duration, e.g., two time intervals, then an optional bonus task specified for a next training module will be provided to user devices 232A-232C. In another example, a rule for a training program may specify criteria that if a team is behind by more than a predetermined percentage, e.g., five, ten, or twenty percent of the next closest score, at a predetermined time, e.g., less than two, five, or eight time intervals remaining, then an optional bonus task specified for a next training module will be provided to user devices 232A-232C. In yet another example, a rule for a training program may specify criteria that a predetermined number of teams, e.g., 10%, 15%, or 25% of the teams, did not provide an indication of completion for a time interval that just ended, then an optional bonus task specified for a next training module will be provided to user devices 232A-232C for those teams that did not provide an indication of completion.

The server 220 may then apply the rule to determine whether to provide the optional bonus task or not provide the optional bonus task. For example, if the server 220 determines that the criteria is satisfied, the server 220 may provide the optional bonus task. If the server 220 determines that the criterion is not satisfied, the server 220 may not provide the optional bonus task. In some implementations, the server 220 may determine to provide bonus modules similarly to the above determination to provide bonus tasks.

In some implementations, the server 220 may also provide announcements to the user devices 232A-232C regarding the training program. For example, announcements may include an introduction to the training program, an invitation to join the training program, a countdown to launch of the training program, an announcement of a meeting time and/or location, a request to provide personal or identifying information, a request to provide an e-mail address, an invitation to join a particular training group, an announcement about the beginning/launch of the training program, an announcement of the time or portion of the training program completed or remaining, an announcement that the training program is over, a congratulations or announcement of winners of a contest, or an invitation to an awards ceremony. The announcements may be sent by the server 220 at various time intervals during a training program. For example, the announcements may be sent in the form of push notifications which the server 220 provides to the user devices 232A-232C.

The user devices 232A-232C may be mobile computing devices, e.g., cell phones. In some implementations, the user devices 232A-232C may include one or more of laptop computers, desktop computers, tablet computers, or other computing devices. The user devices 232A-232C may include one or more native training applications that may be used by the user 234A-C to interact with the server 220. The training applications may provide interfaces 230A-230C on the user devices 232A-232C that enable the users 234A-C to view notifications, request tasks, view tasks, indicate completion of tasks, e.g., provide answers or responses, and view scores. For example, the interfaces 230A-230C may display "COMPLETE THESE TRAINING TASKS" followed by one or more tasks. In some implementations, the training applications may be non-native applications. For example, the training applications may be Java-based or web-based applications that may be accessed by multiple different user devices. In some implementations, the training applications may store training modules or training tasks. In some implementations, the training applications may generate some or all of the notifications from stored training modules or training tasks that the server 220 would otherwise push to the user devices 232A-232C.

The user devices 232A-232C may be used by the users 234A-234C before a training program begins. For example, the user devices 232A-232C may receive input from the users 234A-234C indicating names of teams and members of teams. The user devices 232A-232C may provide the information to the server 220.

After a training program begins, the user devices 232A-232C may receive notifications that training modules 222 are available for access. The user devices 232A-232C may provide the notification to the users 234A-234C in the form of a visual notification, e.g., a pop-up message or a notification light, an audio notification, e.g., an acoustic message, or a haptic notification, e.g., vibration of the user devices 232A-232C. In some implementations, the user devices 232A-232C may repeat notifications. For example, the user devices 232A-232C may repeat a notification every few minutes, hours, or days until a user acknowledges the notification.

The user devices 232A-232C may be used by the users 234A-234C to request one or more tasks associated with training modules 222. For example, the user devices 232A-232C may display a notification that a training module is available for access. If a user interacts with the notification, the user device may open a training application. When the training application opens in response to a user interacting with the notification, the training application may provide a request for one or more tasks associated with a training module from the server 220, receive the one or more tasks, and then display the one or more tasks.

The user devices 232A-232C may be used by the users to provide indications of completion to the server 220. For tasks that can be indicated as completed without providing an answer, the user devices 232A-232C may provide a simple control that may be selected by a user to indicate that the task is completed. For example, the user device 232A-232C may display, "TASK - CREATE A USER PROFILE," followed by a button that displayed "CLICK HERE WHEN COMPLETED."

In some implementations, the user devices 232A-232C may receive instructions for validating that a task is completed and when the button is selected, and may validate that the task has actually been completed. For example, the user devices 232A-232C may determine whether a user profile was created by the user and provide in the indication of completion an indication that completion of the task was validated by the user device so that the server 220 may determine not to validate completion of the task.

The user device 232A-232C may determine what type of task to display and what type of interface to provide the users 234A-234C to receive input from the user based on information received from the server 220 specific to the training task. For tasks that are indicated as completed along with an answer, the user devices 232A-232C may provide one or more interfaces that receive input from the users 234A-234C. For example, the user devices 232A-232C may display "TASK - SUBMIT A SEARCH QUERY" followed by a text box along with the instructions, "INPUT SEARCH QUERY HERE AND HIT SUBMIT BUTTON." In response to a user entering a search query and hitting the submit button, the user device may provide the search query to the server 220.

In some implementations, the user devices 232A-232C may also validate an answer input by a user. For example, the user devices 232A-232C may validate the search query input from the user before providing the search query to the server 220. Along with a task, the user devices 232A-232C may receive instructions from the server 220 for the user devices 232A-232C to validate input from the user for the task. For example, the user devices 232A-232C may receive instructions from the server 220 for validating that input into a textbox for receiving a search query is a valid search query.

In other examples, the user devices 232A-232C may be used to provide indications of completion by enabling users to send SMS messages or e-mail messages to the server 220. The text of the SMS messages or e-mail messages may include text that indicates that one or more tasks were completed. In other examples, the server 220 may receive images or other attachments that may indicate that one or more tasks were completed.

In some implementations, the user devices 232A-232C may enable users 234A-234C to view one or more tasks from previous and current time intervals but not one or more tasks from future time intervals. For example, during a third time interval of a training program with five time intervals, the user devices 232A-232C may enable the users 234A-234C to view one or more tasks from the first three time intervals but no tasks from the next two time intervals. In a particular example, a second time interval may be twenty-four hours and after the twenty-four hours one or more tasks associated with the second time interval may be expired, but may still be viewed by a user, although the one or more tasks may not be marked as completed after the second time interval.

In some implementations, the user devices 232A-232C may enable users 234A-234C to view one or more benefits of completing one or more tasks, one or more training modules, or one or more training programs. For example, the interfaces 230A-230C may include a benefits button that a user may select to view a benefit of a particular task. The benefit may be in the form of text that specifies "BY COMPLETING THIS TASK YOU WILL LEARN HOW TO CREATE A SEARCH QUERY AND BECOME MORE EFFICIENT IN FINDING INFORMATION." The benefits may be provided to the user devices 232A-234C from the server 220 in association with the one or more particular training tasks corresponding to the benefits.

Different configurations of the system 200 may be used where functionality of the administrator device 210, server 220, user devices 232A-232C, and social network 240 may be combined, further separated, distributed, or interchanged.

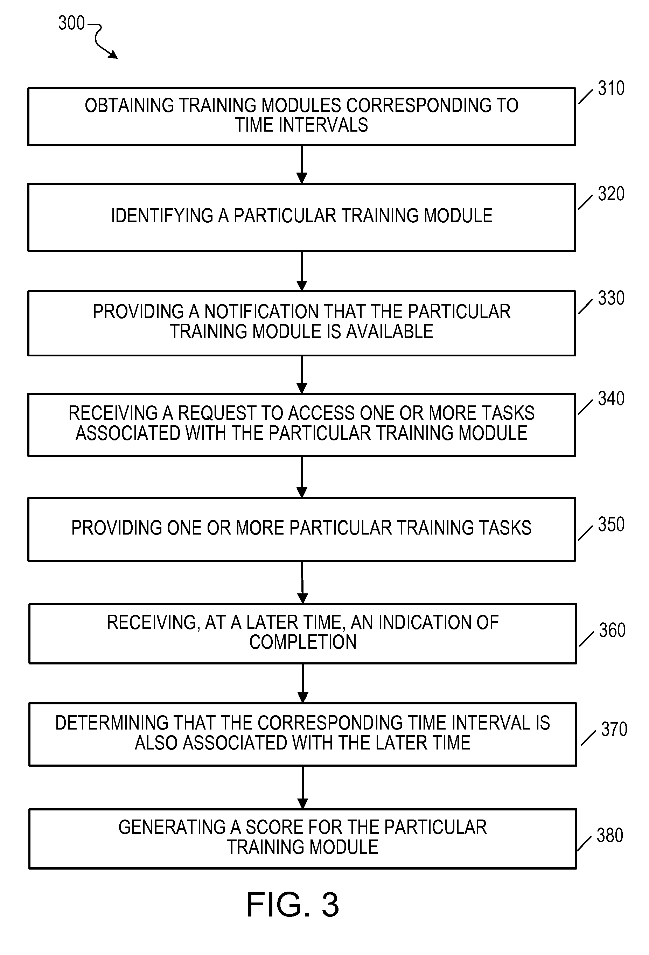

FIG. 3 is a flowchart of an example process 300 for training users. The following describes the process 300 as being performed by components of the system 200 that are described with reference to FIG. 2. However, the process 300 may be performed by other systems or system configurations.

The process 300 may include obtaining training modules 222 corresponding to time intervals (310). For example, the server 220 may obtain training modules from the administrator device 210. In a particular example, the server 220 may obtain five training modules for a training program, where each training module corresponds to a different one of five time intervals of the training program.

The process 300 may include identifying a particular training module (320). For example, at an initial time, the server 220 may determine a time interval of the training program associated with the initial time, and determine the particular training module 222 that corresponds to the time interval. In a particular example, during a second time interval of a training program, the server 220 may determine a current time is associated with the second time interval, and then determine that a second training module corresponds to the second time interval. As described elsewhere, multiple training modules may be associated with a particular time interval, and multiple time intervals may overlap and be associated with a same time.

The process 300 may include providing a notification that the particular training module is available (330). For example, in response to determining that a second training module corresponds to a time interval associated with an initial time, the server 220 may transmit a notification to the user devices 232A-232C that the second training module is available for access. The user devices 232A-232C may then provide the notification to the users 234A-234C in the form of one or more of a visual alert, audio alert, or haptic alert.

The process 300 may include receiving a request to access one or more tasks associated with the particular training module (340). For example, the server 220 may receive a request from a user device to access any tasks associated with a second training module that is currently available for access. In another example, the server 220 may receive a request from a user device to access any tasks associated with the particular training module that corresponds to a current time interval in the training program.

The process 300 may include providing one or more particular training tasks (350). For example, in response to receiving the request to access one or more tasks associated with the particular training module from a particular user device, the server 220 may provide one or more particular training tasks associated with the particular training module to the particular user device. In a particular example, in response to a request for any tasks associated with a second training module, the server 220 may provide a first training task and an optional bonus second training task.

The process 300 may include receiving, at a later time, an indication of completion (360). For example, the server 220 may include an indication of completion generated by a training application on a user device in response to a user selecting a button to indicate that the user has completed a task. The indication of completion may indicate one or more of the user, the task, the training module, the training program, the team, or an answer to the task.

The process 300 may include determining that the corresponding time interval is also associated with the later time (370). For example, the server 220 may determine that the time interval that a training module corresponds to is the same time interval associated with a receipt of an indication of completion. In a particular example, the server 220 may determine that the time interval extended from 8 AM to 8 PM and that the indication of completion was received at 7 PM and thus corresponds to the same time interval. Alternatively, the server 220 may determine that the indication of completion was received at 9 PM and thus does not correspond to the same time interval.

The process 300 may include generating a score for the particular training module (380). For example, the server 220 may generate a score for a particular team for a particular training module based on the indication of completion received for that particular team for that particular training module. The server 220 may generate the score based on obtaining and applying one or more scoring rules to the indication of completion. The server 220 may additionally or alternatively generate the score based on input from the administrator 214 via the administrator device 210. In some implementations, the server 220 may generate a score for a particular team for a particular training module based on multiple indications of completion received for that particular team for training tasks of that particular training module.

In some implementations, the system may include user devices that may be used in an off-line mode or semi-offline mode. For example, the training applications on the user devices may still be used by users to view tasks or complete tasks without a network connection. To enable the off-line or semi-offline mode, the user devices may obtain one or more training modules while a network connection is present in advance of using the one or more training modules. For example, a particular user device may obtain a training module for a next day while a network connection is present during a current day.

During the entire next day, the particular user device may not have a network connection but the training application may use the already obtained training module to identify that the training module should be available for access, in response to the identification generate a notification to the user that the training module is available for access, receive a request to access the training module from a user, display one or more tasks of the training module to the user, receive user input in response to displaying one or more tasks, and determine that the one or more tasks are complete based on the user input. For example, the training application program may display to the user that a training module is available for access, display a question for the user to answer for a task of the training module, display a text box for the user to provide an answer, verify the answer was received during a time interval corresponding to the training module, and store the time when the answer was received from the user. When the particular user device later has a network connection again, the particular user device may provide an indication of completion from the user device that indicates when the answer was received from the user. The server may then generate a score for the user based on when the answer was received, which may be different from when the server received the indication of completion from the user device.

In some implementations, the system may include time intervals that are specific to individual tasks. Each task may be uniquely identified and associated with a corresponding time interval. For example, each task may be associated with a time interval that may be the same or different from time intervals of other tasks. The individual tasks may be associated with time intervals with specified start times and end times, or with specified start times and durations. For example, a first task may be associated with a time interval that starts at noon on the third day of a program and ends at noon on the fourth day, lasting for twenty four hours. The start times and end times of the different tasks may be variously shared or different, and the time intervals may overlap. For example, an additional second task may be associated with a time interval that starts at eight on the third day of the program and ends at ten on the fourth, lasting for twenty six hours, and an additional third task may be associated with a time interval that also starts at eight on the third day of the program but ends earlier at eight on the fourth day, lasting for twenty four hours.

Accordingly, in the implementation, the system may directly use tasks that correspond to different time intervals instead of training modules. For example, the server may determine when the time interval of a task indicates that the task should be available for access based on the start time associated with the task. At that start time, the server may provide a notification to a user device that the task is available for access. The server may also generate scores for tasks based on indications of completion for the tasks.

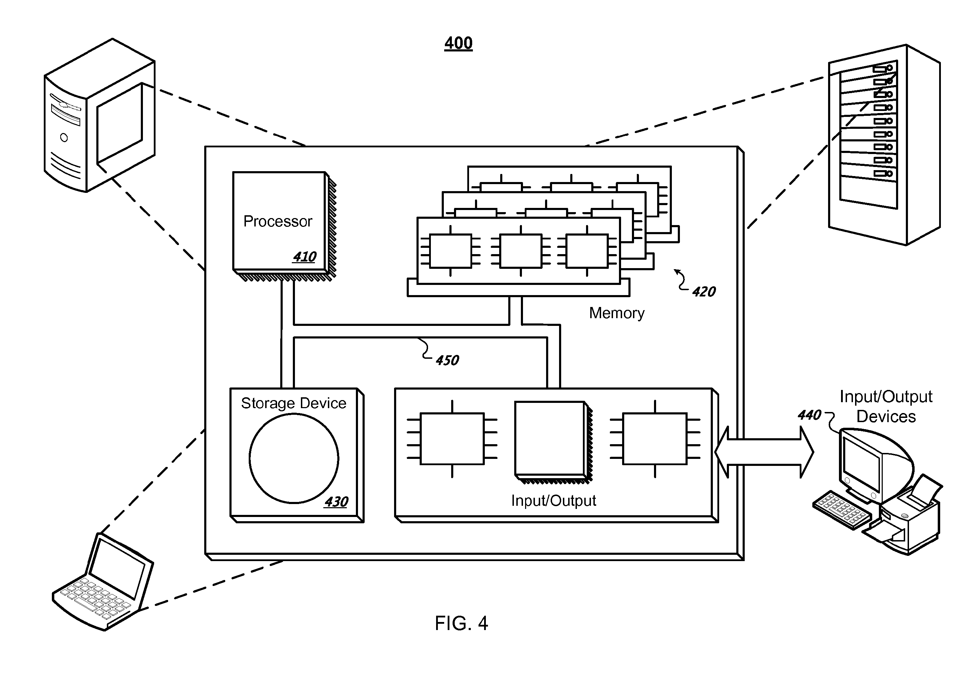

FIG. 4 illustrates a schematic diagram of an exemplary generic computer system. The system 400 can be used for the operations described in association with the processes 100 and/or 300 according to some implementations. The system 400 may be included in the system 200.

The system 400 includes a processor 410, a memory 420, a storage device 430, and an input/output device 440. Each of the components 410, 420, 430, and 440 are interconnected using a system bus 450. Other systems may include multiple of one or more of each of the components 410, 420, 430, and 440. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430 to display graphical information for a user interface on the input/output device 440.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 may be a floppy disk device, a hard disk device, an optical disk device, a tape device, or a flash drive.

The input/output device 440 provides input/output operations for the system 400. In one implementation, the input/output device 440 includes a keyboard, a pointing device, and a display unit for displaying graphical user interfaces. In another implementation, the input/output device 440 includes a touchscreen display.

Embodiments of the subject matter, the functional operations and the processes described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible nonvolatile program carrier for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, application level code, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other steps may be provided, or steps may be eliminated, from the described processes. Accordingly, other implementations are within the scope of the following claims.

### EMBODIMENTS

Although the present invention is defined in the attached claims, it should be understood that the present invention can also (alternatively) be defined in accordance with the following embodiments:
1. A computer-implemented method, comprising:
   obtaining multiple training modules that each correspond to a different time interval associated with a training program, each training module specifying one or more respective training tasks;
   identifying, from among the multiple training modules, a particular training module whose corresponding time interval is associated with an initial time;
   providing, during the time interval and to a user device, a notification that the particular training module is available for access;
   receiving a request to access one or more tasks associated with the particular training module from the user device;
   in response to receiving the request to access the one or more tasks associated with the particular training module from the user device, providing one or more particular training tasks associated with the particular training module to the user device;
   receiving, at a later time, an indication of completion of the one or more particular training tasks from the user device;
   determining that the corresponding time interval is also associated with the later time at which the indication of completion is received; and
   generating a score for the particular training module based on the indication of completion.
2. The computer-implemented method of embodiment 1, comprising:
   identifying, at a further later time and from among the multiple training modules, a different training module whose corresponding different time interval is associated with the further later time;
   providing, during the different time interval and to a user device, a notification that the different training module is available for access;
   receiving a request to access one or more tasks associated with the different training module from the user device;
   in response to receiving a request to access the one or more tasks associated with the different training module from the user device, providing one or more particular training tasks associated with the different training module to the user device;
   receiving, at an even further later time, a subsequent indication of completion of one or more the particular training tasks;
   determining that the corresponding different time interval is also associated with the even further later time at which the subsequent indication of completion is received; and
   generating a score for the different training module based on the subsequent indication of completion.
3. The computer-implemented method of embodiment 2, comprising:
   generating a cumulative score based on the score for the particular training module and the score for the different training module.
4. The computer-implemented method of embodiment 3, comprising:
   ranking the cumulative score against other cumulative scores based on other scores for the particular training module and other scores for the different training module.
5. The computer-implemented method of embodiment 4, comprising:
   based on a ranking of the cumulative score, determining to provide an additional training module to the user device.
6. The computer-implemented method of embodiment 1, comprising:
   based on the score, determining to modify the particular training module for future use.
7. The computer-implemented method of embodiment 1, comprising:
   providing, during the time interval and to a second user device, a notification that the particular training module is available for access;
   receiving a second request to access one or more tasks associated with the particular training module from the second user device;
   in response to receiving the second request to access the one or more tasks associated with the particular training module from the second user device, providing the one or more particular training tasks associated with the particular training module to the second user device;
   receiving, at a second later time, a second indication of completion of the one or more particular training tasks from the second user device;
   determining that the corresponding time interval is also associated with the second later time at which the second indication of completion is received from the second user device; and
   generating a second score for the particular training module based on the second indication of completion.
8. The computer-implemented method of embodiment 1, wherein the user device comprises a mobile computing device.
9. The computer-implemented method of embodiment 1, wherein providing one or more particular training tasks associated with the particular training module to the user device comprises:
   providing instructions to the user device that enable the user device to validate completeness of the one or more particular training tasks.
10. The computer-implemented method of embodiment 1, wherein generating a score for the particular training module based on the indication of completion comprises:
   in response to receiving the indication of completion, obtaining social network information associated with the one or more particular training tasks; and
   generating the score based on the social network information.
11. A system comprising:
   one or more computers and one or more storage devices storing instructions that are operable, when executed by the one or more computers, to cause the one or more computers to perform operations comprising:
      obtaining multiple training modules that each correspond to a different time interval associated with a training program, each training module specifying one or more respective training tasks;
      identifying, from among the multiple training modules, a particular training module whose corresponding time interval is associated with an initial time;
      providing, during the time interval and to a user device, a notification that the particular training module is available for access;
      receiving a request to access one or more tasks associated with the particular training module from the user device;
      in response to receiving the request to access the one or more tasks associated with the particular training module from the user device, providing one or more particular training tasks associated with the particular training module to the user device;
      receiving, at a later time, an indication of completion of the one or more particular training tasks from the user device;
      determining that the corresponding time interval is also associated with the later time at which the indication of completion is received; and
      generating a score for the particular training module based on the indication of completion.
12. The system of embodiment 11, the operations comprising:
   identifying, at a further later time and from among the multiple training modules, a different training module whose corresponding different time interval is associated with the further later time;
   providing, during the different time interval and to a user device, a notification that the different training module is available for access;
   receiving a request to access one or more tasks associated with the different training module from the user device;
   in response to receiving a request to access the one or more tasks associated with the different training module from the user device, providing one or more particular training tasks associated with the different training module to the user device;
   receiving, at an even further later time, a subsequent indication of completion of one or more the particular training tasks;
   determining that the corresponding different time interval is also associated with the even further later time at which the subsequent indication of completion is received; and
   generating a score for the different training module based on the subsequent indication of completion.
13. The system of embodiment 12, the operations comprising:
   generating a cumulative score based on the score for the particular training module and the score for the different training module.
14. The system of embodiment 13, the operations comprising:
   ranking the cumulative score against other cumulative scores based on other scores for the particular training module and other scores for the different training module.
15. The system of embodiment 14, the operations comprising:
   based on a ranking of the cumulative score, determining to provide an additional training module to the user device.
16. The system of embodiment 11, the operations comprising:
   based on the score, determining to modify the particular training module for future use.
17. The system of embodiment 11, the operations comprising:
   providing, during the time interval and to a second user device, a notification that the particular training module is available for access;
   receiving a second request to access one or more tasks associated with the particular training module from the second user device;
   in response to receiving the second request to access the one or more tasks associated with the particular training module from the second user device, providing the one or more particular training tasks associated with the particular training module to the second user device;
   receiving, at a second later time, a second indication of completion of the one or more particular training tasks from the second user device;
   determining that the corresponding time interval is also associated with the second later time at which the second indication of completion is received from the second user device; and
   generating a second score for the particular training module based on the second indication of completion.
18. The system of embodiment 11, wherein the user device comprises a mobile computing device.
19. The system of embodiment 11, wherein providing one or more particular training tasks associated with the particular training module to the user device comprises:
   providing instructions to the user device that enable the user device to validate completeness of the one or more particular training tasks.
20. A non-transitory computer-readable medium storing software comprising instructions executable by one or more computers which, upon such execution, cause the one or more computers to perform operations comprising:
   obtaining multiple training tasks that each correspond to one of multiple time intervals associated with a training program;
   identifying, from among the multiple training tasks, a particular training task whose corresponding time interval is associated with an initial time;
   providing, during the time interval, a notification that the particular training task is available for access;
   receiving a request to access the particular training task;
   in response to receiving the request to access the particular training task, providing the particular training task to the user;
   receiving, at a later time, an indication of completion of the particular training task;
   determining that the corresponding time interval is also associated with the later time at which the indication of completion is received; and
   generating a score for the particular training task based on the indication of completion.

## Claims

1. A computer-implemented method comprising:
obtaining multiple training modules that each correspond to a different time interval associated with a training program, each training module specifying one or more respective training tasks;
identifying, from among the multiple training modules, a particular training module whose corresponding time interval is associated with an initial time;
providing, during the time interval and to a user device, a notification that the particular training module is available for access;
receiving a request to access one or more tasks associated with the particular training module from the user device;
in response to receiving the request to access the one or more tasks associated with the particular training module from the user device, providing one or more particular training tasks associated with the particular training module to the user device;
receiving, at a later time, an indication of completion of the one or more particular training tasks from the user device;
determining that the corresponding time interval is also associated with the later time at which the indication of completion is received; and
generating a score for the particular training module based on the indication of completion.

2. The computer-implemented method of claim 1, comprising:
identifying, at a further later time and from among the multiple training modules, a different training module whose corresponding different time interval is associated with the further later time;
providing, during the different time interval and to a user device, a notification that the different training module is available for access;
receiving a request to access one or more tasks associated with the different training module from the user device;
in response to receiving a request to access the one or more tasks associated with the different training module from the user device, providing one or more particular training tasks associated with the different training module to the user device;
receiving, at an even further later time, a subsequent indication of completion of one or more the particular training tasks;
determining that the corresponding different time interval is also associated with the even further later time at which the subsequent indication of completion is received; and
generating a score for the different training module based on the subsequent indication of completion.

3. The computer-implemented method of claim 2, comprising:
generating a cumulative score based on the score for the particular training module and the score for the different training module.

4. The computer-implemented method of claim 3, comprising:
ranking the cumulative score against other cumulative scores based on other scores for the particular training module and other scores for the different training module.

5. The computer-implemented method of claim 3 or claim 4, comprising:
based on a ranking of the cumulative score, determining to provide an additional training module to the user device.

6. The computer-implemented method of any preceding claim, comprising:
based on the score, determining to modify the particular training module for future use.

7. The computer-implemented method of any preceding claim, comprising:
providing, during the time interval and to a second user device, a notification that the particular training module is available for access;
receiving a second request to access one or more tasks associated with the particular training module from the second user device;
in response to receiving the second request to access the one or more tasks associated with the particular training module from the second user device, providing the one or more particular training tasks associated with the particular training module to the second user device;
receiving, at a second later time, a second indication of completion of the one or more particular training tasks from the second user device;
determining that the corresponding time interval is also associated with the second later time at which the second indication of completion is received from the second user device; and
generating a second score for the particular training module based on the second indication of completion.

8. The computer-implemented method of any preceding claim, wherein the user device comprises a mobile computing device.

9. The computer-implemented method of any preceding claim, wherein providing one or more particular training tasks associated with the particular training module to the user device comprises:
providing instructions to the user device that enable the user device to validate completeness of the one or more particular training tasks.

10. The computer-implemented method of any preceding claim, wherein generating a score for the particular training module based on the indication of completion comprises:
in response to receiving the indication of completion, obtaining social network information associated with the one or more particular training tasks; and
generating the score based on the social network information.

11. A system comprising:
one or more computers and one or more storage devices storing instructions that are operable, when executed by the one or more computers, to cause the one or more computers to perform operations comprising the method of any one of claims 1 to 10.

12. A non-transitory computer-readable medium storing software comprising instructions executable by one or more computers which, upon such execution, cause the one or more computers to perform operations comprising:
obtaining multiple training tasks that each correspond to one of multiple time intervals associated with a training program;
identifying, from among the multiple training tasks, a particular training task whose corresponding time interval is associated with an initial time;
providing, during the time interval, a notification that the particular training task is available for access;
receiving a request to access the particular training task;
in response to receiving the request to access the particular training task, providing the particular training task to the user;
receiving, at a later time, an indication of completion of the particular training task;
determining that the corresponding time interval is also associated with the later time at which the indication of completion is received; and
generating a score for the particular training task based on the indication of completion.
